# EUROPEAN PATENT APPLICATION

(11) **EP 1 739 616 A1**
(43) Date of publication of application: **03.01.2007**
(21) Application number: 06253194.2
(22) Date of filing: 21.06.2006
(51) Int. Cl.: G06Q 30/00

(54) **Process for verifying, labeling and rating diamonds and other gemstones from mine to market**

(30) Priority: 30.06.2005 US 695978 P; 17.05.2006 US 435520
(71) Applicant: Collectors Universe, Inc., Santa Ana, CA 92705 (US)
(72) Inventor: Haynes, Michael R., Laguna Niguel California 92677 (US)
(74) Representative: Fenlon, Christine Lesley

(57) **Abstract**

The present invention is a process for verifying, labeling and rating diamonds and other gemstones from mine to market to show country of origin, compliance with the Kimberley Processes and the quality rating of the diamonds or other gemstones. The process also provides for a review and verification of the outside audit and associated quarterly reviews by the outside auditor of the internal control processes of the mines, the Sightholders and the cutters and polishers of the diamonds or other gemstones.

## Description

### BACKGROUND OF THE INVENTION

### 1. Field of the Invention

The present invention relates to the field of diamonds and other gemstones and in particular to the process of verifying the source of the diamonds or other gemstones and rating the quality of the diamonds or other gemstones.

### 2. Description of the Prior Art

Although mining of diamonds and other gemstones, determining their source of origin and rating the quality of the diamonds and other gemstones are processes which have been in existence for many years, to the best of the present inventor's knowledge, there has been no coordinated reliable process for verifying, labeling and rating diamonds and other gemstones from mine to market to show the country of origin, compliance with the Kimberley certification scheme and the quality ratings of the diamonds and other gemstones.

The following prior art patents are relevant to the field of the present invention:
1. United States Patent No. 5,124,935 issued to Hermann F. Wallner et al. and assigned to Omphalos Recovery Systems Inc. on June 23, 1992 for "Gemstone Identification, Tracking And Recovery System" (hereafter the "Wallner Patent");
2. United States Patent No. 5,935,119 issued to George R. Kaplan et al. and assigned to Lazare Kaplan International, Inc. on August 3, 1999 for "Laser Marking System" (hereafter the "'119 Kaplan Patent")
3. United States Patent No. 6,304,853 issued to Peter J. Malnekoff on October 16, 2001 for "Automated Gemstone Evaluation System" (hereafter the "Malnekoff Patent");
4. United States Patent No. 6,515,738 issued to Odile Barres et al. and assigned to Mauboussin Successeur de Noury on February 4, 2003 for "Method Of Determining The Authenticity And The Geographical Origin Of Gemstones Such As Beryls" (hereafter the "Barres Patent");
5. United States Published Patent Application No. 2003/0120613 issued to Jayant Neogi on June 26, 2003 for "Customizing Objects And Materials With Digital Identifiers" (hereafter the "Neogi Published Patent Application");
6. United States Patent No. 6,624,385 issued to David L. Patton and assigned to Eastman Kodak Company on September 23, 2003 for "Method For Marking Gemstones With A Unique Micro Discrete Indicia" (hereafter the "Patton Patent");
7. United States Published Patent Application No. 2003/0223054 issued to Malcom Raymond Warwick on December 4, 2003 for "Method And Apparatus For Identifying Gemstones" (hereafter the "Warwick Published Patent Application");
8. United States Published Patent Application No. 2004/0112087 issued to John L. Bishop on June 17, 2004 for "Method And Article Of Manufacture For Identifying And Tracking Rough Gemstones" (hereafter the "Bishop Published Patent Application");
9. United States Published Patent Application No. 2005/0149369 issued to Menahem Sevdermish on July 7, 2005 for "Method For Digital Color Grading Of Gems And Communication Thereof" (hereafter the "Sevdermish Published Patent Application");
10. United States Patent No. 7,010,938 issued to George R. Kaplan and assigned to Lazare Kaplan International, Inc. on March 14, 2006 for "Microinscribed Gemstone" (hereafter the "'938 Kaplan Patent");
11. International Patent Application No. WO 02/11031 issued to Jayant Neogi and assigned to Norsam Technologies, Inc. on February 7, 2002 for "Customizing Objects And Materials With Digital Identifiers" (hereafter the "'031 Neogi International Patent Application");
12. International Patent Application No. WO 02/11091 issued to Jayant Neogi and assigned to Norsam Technologies, Inc. on February 7, 2002 for "Method And Article Of Manufacture For Identifying And Tracking Rough Gemstones" (hereafter the "'091 Neogi International Patent Application").

The Wallner Patent discloses a system for the effective recording and recovery of gemstones using sight machines for recording the optical response of gemstones with these optical responses being forwarded to a central database for classifying in a manner to allow effective searching of the database. The sight machine progressively scans the optical response of the gemstone and provides an accurate record of the optical response of the gemstone. Gemstones reported to the central database as being stolen have the records duplicated in a separate database which can be searched remotely by police and other enforcement agencies for a possible match with the optical response of gemstones they have recovered.

The '119 Kaplan Patent deals with a laser marking system wherein the concept is to mark the diamond with a unique marking characteristic and to record those unique characteristics in the database so that the same marking characteristic is not repeated on another diamond.

The Malnekoff Patent discloses a system wherein an individual already has all the information about the specific stone and inputs that information into the inventors database so that the information can enable the database to provide the owner of the stone with an evaluation as to what the stone is worth based upon the information about the cut type, weight, clarity, color and cut proportions of the stone. In the invention, the central processing unit of the company creates an initial price value based at least in part upon the cut type, weight, color and clarity data values supplied to the system by the user and adjusted price based upon two or more variables in the stone.

The Barres Patent is a method of determining the authenticity and the geographical origin of gemstones such as beryls. In this case, the invention is achieved by a method of determining the authenticity and the geographical origins of gemstones of crystal structure which comprises the steps of applying an electromagnetic beam to the gemstone; determining values associated with the absorbency of the gemstone for wavelengths of the beam in an absorption direction that is predetermined relative to a characteristic access of the crystal; calculating at least one ratio between these values; and comparing the ratio or ratios with predetermined corresponding ratios belonging to gemstones of predetermined authenticity and origin.

The Neogi Patent discloses a concept of having a method and apparatus for marking, identifying and customizing and tracking objects of mined materials such as gemstones and precious metals.

The Patton Patent discloses a method for providing micro-discrete indicia on a gemstone comprising the steps of:
providing a gemstone;
selecting an area on the gemstone for placement of a micro-discrete indicia; and
forming the micro-discrete indicia on the gemstone using near-field optics.

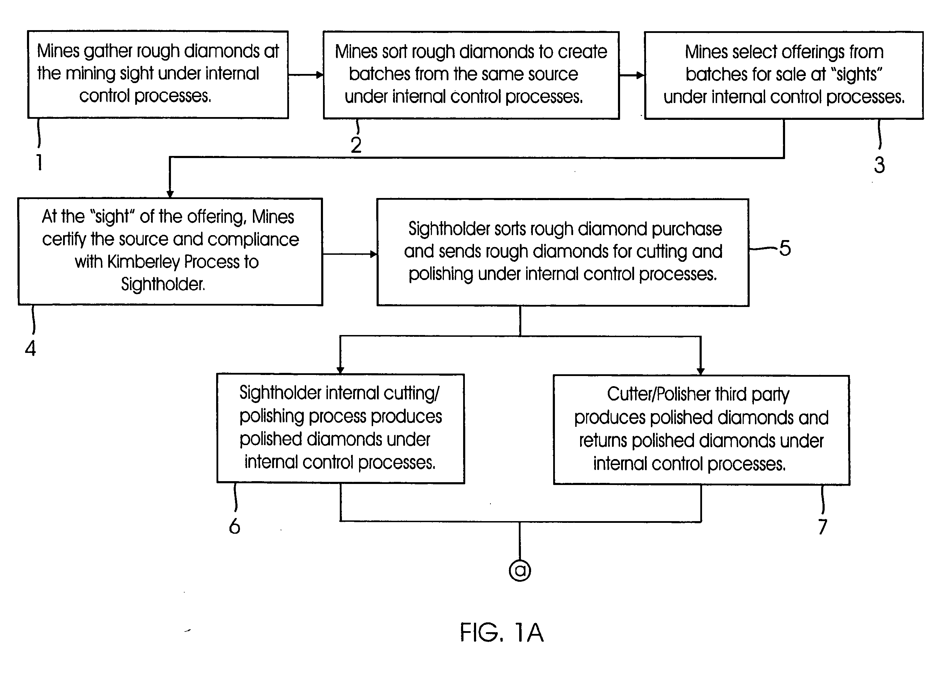

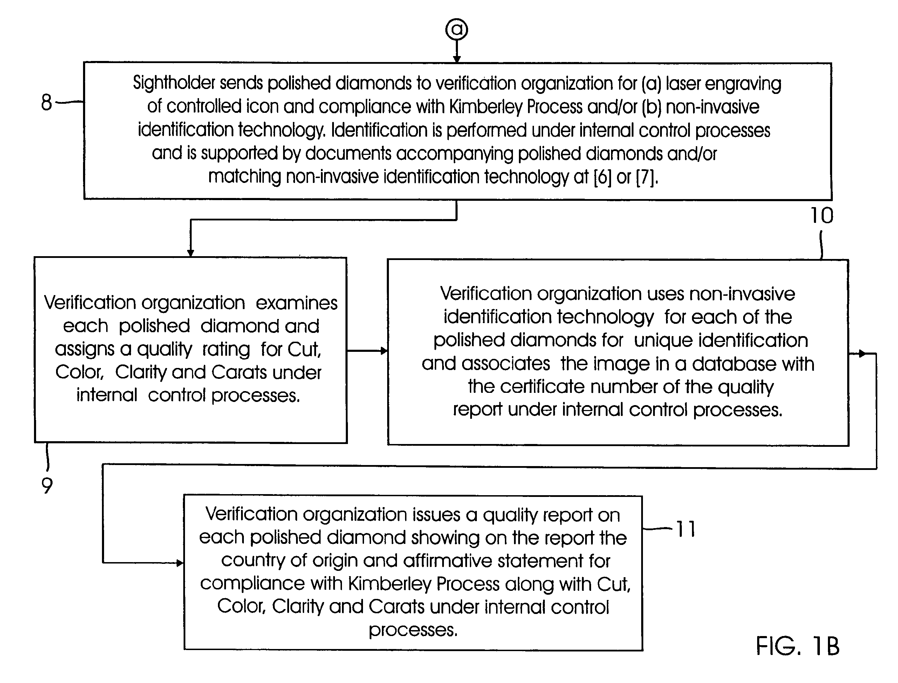

With respect to the near-field optics that is discussed, it is illustrated in Figure 1 where there is an apparatus 10 for forming unique micro-discrete indicia 15 which apparently is on the table of the diamond. Indicia 15 are created on the gemstone by transmitting light from the light source 45 through a mask 25 containing an image 27. The light beam 40 from a variety of laser light sources 45 such as an exciter, or a frequency doubled Nd:YAG laser passes through the mask 27 and is reflected by a mirror 50 through a lens system 55 and passes through an objective lens 66 that impinges onto a solid immersion lens (SIL) 65. The gemstone resting on a stage 70 is placed within a critical distance F. Images form from such as system will have a lateral spacial resolution that exceeds the classical differentiation limit. A light beam 75 passes through an objective lens 60 and impinges onto the solid immersion lens 65. Therefore, this is a process by which the specific number is engraved in the gemstone.

The Warwick Published Patent Application deals with an apparatus for obtaining information about inclusion geo-spatial orientation within a gemstone which comprises of means to measure the distance to and location of one or more selected inclusions within said gemstone relative to one or more points of assessment situated on or within the gemstone; and a monitoring system for collecting, compiling and analyzing data on the same. Referring to item 68 on Column 5 the patent states in the middle of item 68 "For example, a mining company may conduct an analysis of a rough gemstone to give it a first original model or profile, a copy of which would then be carried downstream throughout all subsequent manufacturing steps, perhaps ultimately to a consumer. A government undertaking a certification and monitoring program of diamonds mined within its' jurisdiction may produce a second model or may have manufacturers produce a second model of the sawn parts of the rough gemstone." The method involves measuring the geo-spatial distances as discussed above.

The Bishop Published Patent Application discloses a method of marking and identifying a gemstone and thereafter encasing the selected gemstone with a removable casing. The identifier may be a chemical composition of the casing, a tag, logo or similar mark or an encoded identifier such as a bar-code, matrix or data graph. The information relates to the origin, identity, chain of possession, and owner of the gemstone. As set forth in item 11 of the application, information about a mined object such as a gemstone is obtained including the source of a gemstone present in the form of a trademark or logo. The grade of the gemstone, the mine from which the gemstone was extracted, the processing which has occurred, the chain of possession, the serial number associated with a particular stone and other related information. For this purpose, gemstones are encased in removable substance preferably a polymer. The encasing may be fingerprinted with micro-tags and/or macro-tags may be encoded with a laser, ion beam, etc. In this case the concept to apply the coding to the mined object and adding the identifier to the coding and then curing the coding so that the mined object is included in the coding.

The Sevdermish Published Patent Application deals with a method for digital color grading of gemstones. The concept of this invention is to have a database having stored information which includes information on various gem shapes, various use for each gem shape, etc., then having a feel for displaying the image of the gem shape with the selected views and a data processor to enable the user to select from said database a gem shape to match the gemstone being graded.

The '938 Kaplan Patent deals with a micro-inscribed gemstone. Claim 1 reads "a diamond having a microinscribed marking comprising a plurality of laser generated graphitized spots on a polished surface of the diamond, each spot having a depth of less than about 10 microns and having a width of less than about 9 microns wherein a positional accuracy of placement of each of the graphitized spots to form the marking is within about 1 micron. This patent deals in effect with microinscribing the diamond primarily on the table as indicated in the figures.

The '031 Neogi International Patent is essentially the published application of the previously described United States application of Neogi which was published in June 2003 and discussed above.

The '091 Neogi International Patent is a different international published application and in comparison of this published Neogi application which was published in February 2002 shows that it mirrors the Bishop Published Patent Application that was published in June 2004 and previously discussed.

### SUMMARY OF THE INVENTION

An embodiment of the present invention is a process for verifying, labeling and rating diamonds from mine to market to show all or any portion of the following: country of origin, compliance with the Kimberley Process and the quality rating of the diamonds. The process also provides for all or any portion of the following: a review and verification of the outside audit, reviews by the outside auditor of the internal control processes of the mines, outside auditor review of the internal control of the Sightholders and the cutters and polishers of the diamonds, and review and verification of non-invasive diamond identification technologies used by the cutters and polishers.

Another embodiment of the present invention is also a process for verifying, labeling and rating gemstones from mine to market to show all or any portion of the following:
country of origin, compliance with the Kimberley Process and the quality rating of the gemstones. The process also provides for all or any portion of the following: a review and
verification of the outside audit, reviews by the outside auditor of the internal control processes of the mines, outside auditor review of the internal control of the Sightholders and
the cutters and polishers of the gemstones, and review and verification of non-invasive gemstones identification technologies used by the cutters and polishers.

### BRIEF DESCRIPTION OF THE DRAWINGS

Referring particularly to the drawings for the purpose of illustration only and not limitation, there is illustrated:
FIG. 1 is a block diagram illustrating a process embodying the present invention for verifying, labeling and rating diamonds from mine to market to show the country of origin, compliance with Kimberley Process and the quality ratings of the diamonds.
FIG. 2 is a block diagram illustrating a process embodying the present invention for verifying, labeling and rating gemstones from mine to market to show the country of origin, compliance with Kimberley Process and the quality ratings of the diamonds.

### DETAILED DESCRIPTION OF THE PREFERRED EMBODIMENTS

Although specific embodiments of the present invention will now be described with reference to the drawings, it should be understood that such embodiments are by way of example only and merely illustrative of but a small number of the many possible specific embodiments which can represent applications of the principles of the present invention. Various changes and modifications obvious to one skilled in the art to which the present invention pertains are deemed to be within the spirit, scope and contemplation of the present invention as further defined in the appended claims.

An embodiment of the present invention is a process for verifying, labeling and rating diamonds from mine to market to show the country of origin, compliance with the Kimberley Process Certification Scheme (which comprise international voluntary standards for the gathering and distribution of diamonds), and the quality ratings of the diamonds.

Referring to the block diagram of Figure 1, the first step in the process labeled block 1 is for the mines to gather rough diamonds at the mining site under internal control processes. The second step in the process labeled block 2 is for the mines to sort through the rough diamonds to create batches from the same source under internal control processes. The third step in the process labeled block 3 is for the mines to select offerings from batches for sale at "sights" under internal control processes. The fourth step in the process labeled block 4 is for the mines to certify the source of the diamonds and compliance with the Kimberley Process Certification Scheme. This certification is provided in conjunction with the offering to Sightholders at the sight. The fifth step in the process which is labeled block 5 is for the Sightholder to sort the rough diamond purchase and send the rough diamonds for cutting and polishing under internal control processes. The sixth step in the process has two alternative courses. One alternative course which is labeled block 6 is invoked if the cutting and polishing is under the control of the Sightholder. In this case the process produces polished diamonds under internal control processes. For the second alternative labeled block 7, if the cutting and polishing is performed by a third party, then the cutter and polisher third party produces polished diamonds and returns the polished diamonds under internal control processes. In either case represented by blocks 6 and 7, the internal control processes may be supported by noninvasive identification technology.

For the seventh step in the process labeled block 8, regardless of which alternative was used in the sixth step, the sightholder sends the polished diamonds to a verification organization. A series of proprietary icons identifying each specific country where diamonds are mined is available to the verification organization, which laser engraves the appropriate icons on each diamond after the verification organization determines compliance with the Kimberley Process as supported by the documents accompanying the polished diamonds and/or the non-invasive identification technology used in blocks 6 and 7. If non-invasive identification technology has not been previously applied to the diamonds, it may be applied for the first time in this step. This step is performed under internal control processes.

For the eighth step in the process labeled block 9, the verification organization examines each polished diamond and assigns a quality rating for cut, color, clarity and carats under internal control processes.

For the ninth step in the process labeled block 10, the verification organization applied non-invasive identification technology to each of the polished diamonds for unique identification and associates the corresponding image in a database with the certificate number of the diamond quality report. This step is performed under internal control processes.

For the tenth step in the process labeled block 11, the verification organization issues a quality report on each polished diamond showing on the report the country of origin and an affirmative statement for compliance with the Kimberley Process along with the information about cut, color, clarity and carats. This step is performed under internal control processes.

As a final due diligence step, the verification organization reviews and verifies the outside audit and associated quarterly reviews by the outside auditor of the internal control processes of the mines, the Sightholders and the cutters and polishers.

While an embodiment of the present invention has been discussed for use with diamonds, it will be appreciated that an embodiment of the present invention is also applicable to any other type of gemstones such as any one or more of colored gemstones such as rubies, emeralds, sapphires, and also semi-precious stones, all of which are collectively defined as gemstones.

Alternatively, an embodiment of the present invention is a process for verifying, labeling and rating gemstones from mine to market to show the country of origin, compliance with the Kimberley Process Certification Scheme (which comprise international voluntary standards for the gathering and distribution of diamonds), and the quality ratings of the gemstones.

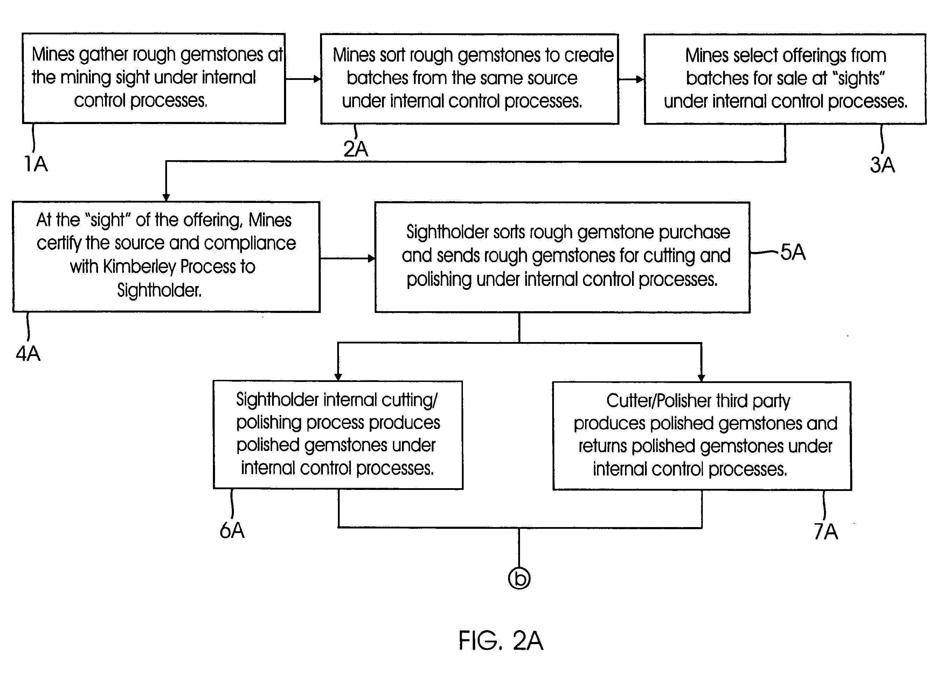

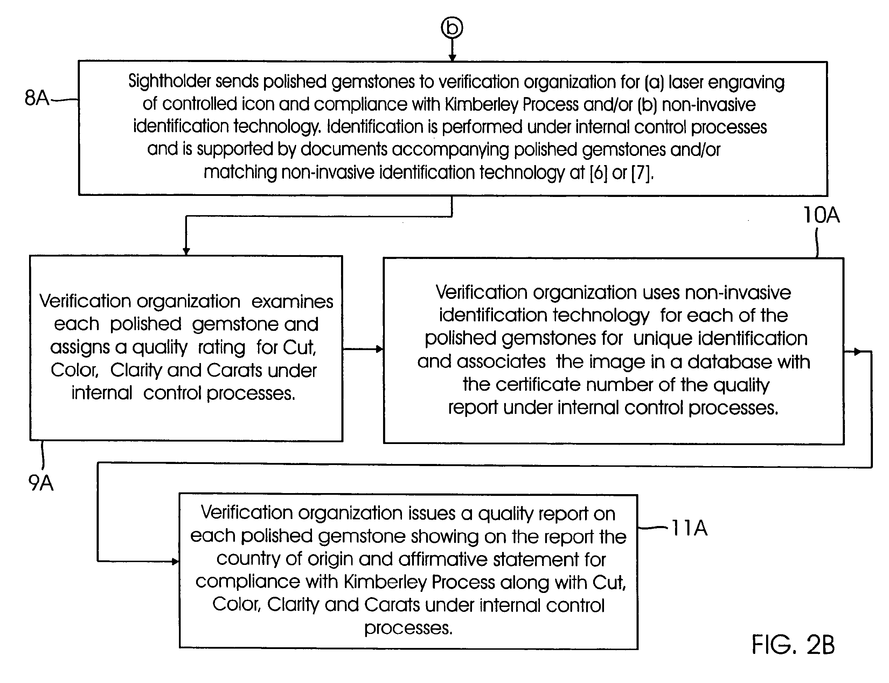

Referring to the block diagram of Figure 2, the first step in the process labeled block 1A is for the mines to gather rough gemstones at the mining site under internal control processes. The second step in the process labeled block 2A is for the mines to sort through the rough gemstones to create batches from the same source under internal control processes. The third step in the process labeled block 3A is for the mines to select offerings from batches for sale at "sights" under internal control processes. The fourth step in the process labeled block 4A is for the mines to certify the source of the gemstones and compliance with the Kimberley Process Certification Scheme. This certification is provided in conjunction with the offering to Sightholders at the sight. The fifth step in the process which is labeled block 5A is for the Sightholder to sort the rough gemstone purchase and send the rough gemstones for cutting and polishing under internal control processes. The sixth step in the process has two alternative courses. One alternative course which is labeled block 6A is invoked if the cutting and polishing is under the control of the Sightholder. In this case the process produces polished gemstones under internal control processes. For the second alternative labeled block 7A, if the cutting and polishing is performed by a third party, then the cutter and polisher third party produces polished gemstones and returns the polished gemstones under internal control processes. In either case represented by blocks 6A and 7A, the internal control processes may be supported by noninvasive identification technology.

For the seventh step in the process labeled block 8A, regardless of which alternative was used in the sixth step, the Sightholder sends the polished gemstones to a verification organization. A series of proprietary icons identifying each specific country where gemstones are mined is available to the verification organization, which laser engraves the appropriate icons on each gemstone after the verification organization determines compliance with the Kimberley Process as supported by the documents accompanying the polished gemstones and/or the non-invasive identification technology used in blocks 6A and 7A. If non-invasive identification technology has not been previously applied to the diamonds, it may be applied for the first time in this step. This step is performed under internal control processes.

For the eighth step in the process labeled block 9A, the verification organization examines each polished gemstone and assigns a quality rating for cut, color, clarity and carats under internal control processes.

For the ninth step in the process labeled block 10A, the verification organization applied non-invasive identification technology to each of the polished gemstones for unique identification and associates the corresponding image in a database with the certificate number of the diamond quality report. This step is performed under internal control processes.

For the tenth step in the process labeled block 11A, the verification organization issues a quality report on each polished gemstone showing on the report the country of origin and an affirmative statement for compliance with the Kimberley Process along with the information about cut, color, clarity and carats. This step is performed under internal control processes.

As a final due diligence step, the verification organization reviews and verifies the outside audit and associated quarterly reviews by the outside auditor of the internal control processes of the mines, the Sightholders and the cutters and polishers.

Defined in detail, an embodiment of the present invention is a process for verifying, labeling and rating diamonds from mine to market, comprising: (a) gathering rough diamonds at a mine site under internal control supervision; (b) sorting the rough diamonds gathered at the mine under internal control to create batches of rough diamonds all gathered from the same source mine; (c) under internal control, offering for sale at a site the batches of rough diamonds; (d) certifying the source of the rough diamonds and compliance with a Kimberley Process to a Sightholder; (e) the Sightholder purchases at least one batch of rough diamonds and prepares the purchased batch of diamonds for cutting and polishing under internal control processes of the Sightholder; (f) the Sightholder internal cutting and polishing process produces polished diamonds under internal control processes which can include providing non-invasive identification of the diamonds; (g) under internal control, the Sightholder sends the polished diamonds to a verification organization which either laser engraves the diamonds with a proprietary icon or utilizes non-invasive identification technology to certify a country of origin and compliance with the Kimberley Process, the verification organization also provides documents certifying the country of origin and compliance with the Kimberley Process; (h) under internal control, the verification organization examines each polished diamond and assigns a quality rating for cut, color, clarity and carets to each polished diamond; (i) under internal control, the verification organization applies non-invasive identification technology to each polished diamond for unique identification information and associates the information from the non-invasive identification technology in a database with a certificate number and the quality rating of the respective polished diamond; and (j) under internal control, the verification organization issues a quality report on each polished diamond showing on the report the country of origin and affirmative statements for compliance with the Kimberley Process along with cut, color, clarity and carats.

Defined alternatively in detail, an embodiment of the present invention is a process for verifying, labeling and rating diamonds from mine to market, comprising: (a) gathering rough diamonds at a mine site under internal control supervision; (b) sorting the rough diamonds gathered at the mine under internal control to create batches of rough diamonds all gathered from the same source mine; (c) under internal control, offering for sale at a site the batches of rough diamonds; (d) certifying the source of the rough diamonds and compliance with a Kimberley Process to a Sightholder; (e) the Sightholder purchases at least one batch of rough diamonds and prepares the purchased batch of diamonds for cutting and polishing under internal control processes of the Sightholder; (f) the Sightholder sends the batch of diamonds to a third party who polishes the diamonds and returns the polished diamonds to the Sightholders, the process supervised under internal control which can include providing non-invasive identification of the diamonds; (g) under internal control, the Sightholder sends the polished diamonds to a verification organization which either laser engraves the diamonds with a proprietary icon or utilizes non-invasive identification technology to certify a country of origin and compliance with the Kimberley Process, the verification organization also provides documents certifying the country of origin and compliance with the Kimberley Process; (h) under internal control, the verification organization examines each polished diamond and assigns a quality rating for cut, color, clarity and carets to each polished diamond; (i) under internal control, the verification organization applies non-invasive identification technology to each polished diamond for unique identification ineinformation and associates the information from the non-invasive identification technology in a database with a certificate number and the quality rating of the respective polished diamond; and (j) under internal control, the verification organization issues a quality report on each polished diamond showing on the report the country of origin and affirmative statements for compliance with the Kimberley Process along with cut, color, clarity and carats.

Defined more broadly, an embodiment of the present invention is a process for verifying, labeling and rating diamonds from mine to market, comprising: (a) gathering rough diamonds at a mine site under internal control supervision; (b) sorting the rough diamonds gathered at the mine under internal control to create batches of rough diamonds all gathered from the same source mine; (c) under internal control, offering for sale the batches of rough diamonds; (d) certifying the source of the rough diamonds to a purchaser; (e) the purchaser causes the purchased batch of diamonds to be cut and polished, where the polishing process is supervised to be sure the polished diamonds are the same diamonds that were purchased; (f) under internal control, the purchaser sends the polished diamonds to a verification organization which either laser engraves the diamonds with a proprietary icon or utilizes non-invasive identification technology to certify a country of origin and compliance with applicable international standards for gathering diamonds, the verification organization also provides documents certifying the country of origin and compliance with the standards; (g) under internal control, the verification organization examines each polished diamond and assigns a quality rating for cut, color, clarity and carets to each polished diamond; (h) under internal control, the verification organization applies non-invasive identification technology to each polished diamond for unique identification information and associates the information from the non-invasive identification technology in a database with a certificate number and the quality rating of the respective polished diamond; and (i) under internal control, the verification organization issues a quality report on each polished diamond showing on the report the country of origin and affirmative statements for compliance with the applicable legal standards along with cut, color, clarity and carats.

Defined even more broadly, an embodiment of the present invention is a process for verifying, labeling and rating diamonds from mine to market, comprising: (a) gathering rough diamonds at a mine site under internal control supervision; (b) sorting the rough diamonds gathered at the mine under internal control to create batches of rough diamonds all gathered from the same source mine; (c) under internal control, offering for sale the batches of rough diamonds; (d) certifying the source of the rough diamonds to a purchaser; (e) the purchaser causes the purchased batch of diamonds to be cut and polished, where the polishing process is supervised to be sure the polished diamonds are same diamonds that were purchased; (f) under internal control, the purchaser sends the polished diamonds to a verification organization which either laser engraves the diamonds with a proprietary icon or utilizes non-invasive identification technology to certify a country of origin and compliance with applicable international standards for gathering diamonds, the verification organization also provides documents certifying the country of origin and compliance with the standards; (g) under internal control, the verification organization examines each polished diamond and assigns a quality rating for at least one of the following, cut, color, clarity and carets to each polished diamond; (h) under internal control, the verification organization applies non-invasive identification technology to each polished diamond for unique identification information and associates the information from the non-invasive identification technology in a database with an assigned information record setting forth the quality rating of the respective polished diamond; and (i) under internal control, the verification organization issues a quality report on each polished diamond showing on the report the country of origin and affirmative statements for compliance with the applicable legal standards along with at least one of the following, cut, color, clarity and carats.

Defined most broadly, an embodiment of the present invention is a process for verifying, labeling and rating diamonds from mine to market, comprising: (a) supervising the gathering of rough diamonds at a mine and dividing the gathered rough diamonds into batches which are then offered for sale to a purchaser who receives a certification of the source of the diamonds purchased; (b) the purchaser causes the purchased batch of diamonds to be cut and polished, where the polishing process is supervised to be sure the polished diamonds are same diamonds that were purchased; (c) under internal control, the purchaser sends the polished diamonds to a verification organization which provides means to identify the diamonds to certify a country of origin, the verification organization providing documents certifying the country of origin; (d) under internal control, the verification organization examines each polished diamond and assigns a quality rating for at least one of cut, color, clarity and carets to each polished diamond; (e) under internal control, the verification organization obtains identification means of each polished diamond for unique identification information and associates the information in a database with an assigned information source setting forth the quality rating of the respective polished diamond; and (f) under internal control, the verification organization issues a quality report on each polished diamond showing on the report the country of origin along with at least one of the following, cut, color, clarity and carats.

Alternatively defined in detail, an embodiment of the present invention is a process for verifying, labeling and rating gemstones from mine to market, comprising: (a) gathering rough gemstones at a mine site under internal control supervision; (b) sorting the rough gemstones gathered at the mine under internal control to create batches of rough gemstones all gathered from the same source mine; (c) under internal control, offering for sale at a site the batches of rough gemstones; (d) certifying the source of the rough gemstones and compliance with a Kimberley Process to a Sightholder; (e) the Sightholder purchases at least one batch of rough gemstones and prepares the purchased batch of gemstones for cutting and polishing under internal control processes of the Sightholder; (f) the Sightholder internal cutting and polishing process produces polished gemstones under internal control processes which can include providing non-invasive identification of the gemstones; (g) under internal control, the Sightholder sends the polished gemstones to a verification organization which either laser engraves the gemstones with a proprietary icon or utilizes non-invasive identification technology to certify a country of origin and compliance with the Kimberley Process, the verification organization also provides documents certifying the country of origin and compliance with the Kimberley Process; (h) under internal control, the verification organization examines each polished gemstone and assigns a quality rating for cut, color, clarity and carets to each polished gemstone; (i) under internal control, the verification organization applies non-invasive identification technology to each polished gemstone for unique identification information and associates the information from the non-invasive identification technology in a database with a certificate number and the quality rating of the respective polished gemstone; and (j) under internal control, the verification organization issues a quality report on each polished gemstone showing on the report the country of origin and affirmative statements for compliance with the Kimberley Process along with cut, color, clarity and carats.

Alternatively defined alternatively in detail, an embodiment of the present invention is a process for verifying, labeling and rating gemstones from mine to market, comprising: (a) gathering rough gemstones at a mine site under internal control supervision; (b) sorting the rough gemstones gathered at the mine under internal control to create batches of rough gemstones all gathered from the same source mine; (c) under internal control, offering for sale at a site the batches of rough gemstones; (d) certifying the source of the rough gemstones and compliance with a Kimberley Process to a Sightholder; (e) the Sightholder purchases at least one batch of rough gemstones and prepares the purchased batch of gemstones for cutting and polishing under internal control processes of the Sightholder; (f) the Sightholder sends the batch of gemstones to a third party who polishes the gemstones and returns the polished gemstones to the Sightholders, the process supervised under internal control which can include providing non-invasive identification of the gemstones; (g) under internal control, the Sightholder sends the polished gemstones to a verification organization which either laser engraves the gemstones with a proprietary icon or utilizes non-invasive identification technology to certify a country of origin and compliance with the Kimberley Process, the verification organization also provides documents certifying the country of origin and compliance with the Kimberley Process; (h) under internal control, the verification organization examines each polished gemstone and assigns a quality rating for cut, color, clarity and carets to each polished gemstone; (i) under internal control, the verification organization applies non-invasive identification technology to each polished gemstone for unique identification information and associates the information from the non-invasive identification technology in a database with a certificate number and the quality rating of the respective polished gemstone; and (j) under internal control, the verification organization issues a quality report on each polished diamond showing on the report the country of origin and affirmative statements for compliance with the Kimberley Process along with cut, color, clarity and carats.

Alternatively defined more broadly, an embodiment of the present invention is a process for verifying, labeling and rating gemstones from mine to market, comprising: (a) gathering rough gemstones at a mine site under internal control supervision; (b) sorting the rough gemstones gathered at the mine under internal control to create batches of rough gemstones all gathered from the same source mine; (c) under internal control, offering for sale the batches of rough gemstones; (d) certifying the source of the rough gemstones to a purchaser; (e) the purchaser causes the purchased batch of gemstones to be cut and polished, where the polishing process is supervised to be sure the polished gemstones are the same gemstones that were purchased;
(f) under internal control, the purchaser sends the polished diamonds to a verification organization which either laser engraves the gemstones with a proprietary icon or utilizes non-invasive identification technology to certify a country of origin and compliance with applicable international standards for gathering gemstones, the verification organization also provides documents certifying the country of origin and compliance with the standards;
(h) under internal control, the verification organization examines each polished gemstone and assigns a quality rating for cut, color, clarity and carets to each polished gemstone;
(i) under internal control, the verification organization applies non-invasive identification technology to each polished gemstone for unique identification information and associates the information from the non-invasive identification technology in a database with a certificate number and the quality rating of the respective polished gemstone; and (j) under internal control, the verification organization issues a quality report on each polished gemstone showing on the report the country of origin and affirmative statements for compliance with the applicable legal standards along with cut, color, clarity and carats.

Alternatively defined even more broadly, an embodiment of the present invention is a process for verifying, labeling and rating gemstones from mine to market, comprising: (a) gathering rough gemstones at amine site under internal control supervision; (b) sorting the rough gemstones gathered at the mine under internal control to create batches of rough gemstones all gathered from the same source mine; (c) under internal control, offering for sale the batches of rough gemstones; (d) certifying the source of the rough gemstones to a purchaser;
(e) the purchaser causes the purchased batch of gemstones to be cut and polished, where the polishing process is supervised to be sure the polished gemstones are same gemstones that were purchased; (f) under internal control, the purchaser sends the polished gemstones to a verification organization which either laser engraves the gemstones with a proprietary icon or utilizes non-invasive identification technology to certify a country of origin and compliance with applicable international standards for gathering gemstones, the verification organization also provides documents certifying the country of origin and compliance with the standards; (g) under internal control, the verification organization examines each polished gemstone and assigns a quality rating for at least one of the following, cut, color, clarity and carets to each polished gemstone; (h) under internal control, the verification organization applies non-invasive identification technology to each polished gemstone for unique identification information and associates the information from the non-invasive identification technology in a database with an assigned information record setting forth the quality rating of the respective polished gemstone; and (i)under internal control, the verification organization issues a quality report on each polished gemstone showing on the report the country of origin and affirmative statements for compliance with the applicable legal standards along with at least one of the following, cut, color, clarity and carats.

Alternatively defined most broadly, an embodiment of the present invention is a process for verifying, labeling and rating gemstones from mine to market, comprising: (a) supervising the gathering of rough gemstones at a mine and dividing the gathered rough gemstones into batches which are then offered for sale to a purchaser who receives a certification of the source of the gemstones purchased; (b) the purchaser causes the purchased batch of gemstones to be cut and polished, where the polishing process is supervised to be sure the polished diamonds are same gemstones that were purchased; (c) under internal control, the purchaser sends the polished gemstones to a verification organization which provides means to identify the gemstones to certify a country of origin, the verification organization providing documents certifying the country of origin; (d) under internal control, the verification organization examines each polished gemstone and assigns a quality rating for at least one of cut, color, clarity and carets to each polished gemstone; (e) under internal control, the verification organization obtains identification means of each polished gemstone for unique identification information and associates the information in a database with an assigned information source setting forth the quality rating of the respective polished gemstone; and (f) under internal control, the verification organization issues a quality report on each polished gemstone showing on the report the country of origin along with at least one of the following, cut, color, clarity and carats.

Of course the present invention is not intended to be restricted to any particular form or arrangement, or any specific embodiment, or any specific use, disclosed herein, since the same may be modified in various particulars or relations without departing from the spirit or scope of the claimed invention hereinabove shown and described of which the apparatus or method shown is intended only for illustration and disclosure of an operative embodiment and not to show all of the various forms or modifications in which this invention might be embodied or operated.

## Claims

1. A process for verifying, labeling and rating diamonds from mine to market, comprising:
a. gathering rough diamonds at a mine site under internal control supervision;
b. sorting said rough diamonds gathered at the mine under internal control to create batches of rough diamonds all gathered from the same source mine;
c. under internal control, offering for sale at a site said batches of rough diamonds;
d. certifying the source of the rough diamonds and compliance with a Kimberley Process to a Sightholder;
e. said Sightholder purchases at least one batch of rough diamonds and prepares the purchased batch of diamonds for cutting and polishing under internal control processes of the Sightholder;
f. the Sightholder internal cutting and polishing process produces polished diamonds under internal control processes which can include providing non-invasive identification of the diamonds;
g. under internal control, the Sightholder sends said polished diamonds to a verification organization which either laser engraves the diamonds with a proprietary icon or utilizes non-invasive identification technology to certify a country of origin and compliance with the Kimberley Process, the verification organization also provides documents certifying the country of origin and compliance with the Kimberley Process;
h. under internal control, said verification organization examines each polished diamond and assigns a quality rating for cut, color, clarity and carets to each polished diamond;
i. under internal control, said verification organization applies non-invasive identification technology to each polished diamond for unique identification information and associates the information from the non-invasive identification technology in a database with a certificate number and the quality rating of the respective polished diamond; and
j. under internal control, the verification organization issues a quality report on each polished diamond showing on the report the country of origin and affirmative statements for compliance with the Kimberley Process along with cut, color, clarity and carats.

2. A process for verifying, labeling and rating diamonds from mine to market, comprising:
a. gathering rough diamonds at a mine site under internal control supervision;
b. sorting said rough diamonds gathered at the mine under internal control to create batches of rough diamonds all gathered from the same source mine;
c. under internal control, offering for sale at a site said batches of rough diamonds;
d. certifying the source of the rough diamonds and compliance with a Kimberley Process to a Sightholder;
e. said Sightholder purchases at least one batch of rough diamonds and prepares the purchased batch of diamonds for cutting and polishing under internal control processes of the Sightholder;
f. the Sightholder sends said batch of diamonds to a third party who polishes the diamonds and returns the polished diamonds to the Sightholders, the process supervised under internal control which can include providing non-invasive identification of the diamonds;
g. under internal control, the Sightholder sends said polished diamonds to a verification organization which either laser engraves the diamonds with a proprietary icon or utilizes non-invasive identification technology to certify a country of origin and compliance with the Kimberley Process, the verification organization also provides documents certifying the country of origin and compliance with the Kimberley Process;
h. under internal control, said verification organization examines each polished diamond and assigns a quality rating for cut, color, clarity and carets to each polished diamond;
i. under internal control, said verification organization applies non-invasive identification technology to each polished diamond for unique identification information and associates the information from the non-invasive identification technology in a database with a certificate number and the quality rating of the respective polished diamond; and
j. under internal control, the verification organization issues a quality report on each polished diamond showing on the report the country of origin and affirmative statements for compliance with the Kimberley Process along with cut, color, clarity and carats.

3. A process for verifying, labeling and rating diamonds from mine to market, comprising:
a. gathering rough diamonds at a mine site under internal control supervision;
b. sorting said rough diamonds gathered at the mine under internal control to create batches of rough diamonds all gathered from the same source mine;
c. under internal control, offering for sale said batches of rough diamonds;
d. certifying the source of the rough diamonds to a purchaser;
e. said purchaser causes the purchased batch of diamonds to be cut and polished, where the polishing process is supervised to be sure the polished diamonds are the same diamonds that were purchased;
f. under internal control, the purchaser sends said polished diamonds to a verification organization which either laser engraves the diamonds with a proprietary icon or utilizes non-invasive identification technology to certify a country of origin and compliance with applicable international standards for gathering diamonds, the verification organization also provides documents certifying the country of origin and compliance with the standards;
g. under internal control, said verification organization examines each polished diamond and assigns a quality rating for cut, color, clarity and carets to each polished diamond;
h. under internal control, said verification organization applies non-invasive identification technology to each polished diamond for unique identification information and associates the information from the non-invasive identification technology in a database with a certificate number and the quality rating of the respective polished diamond; and
i. under internal control, the verification organization issues a quality report on each polished diamond showing on the report the country of origin and affirmative statements for compliance with the applicable legal standards along with cut, color, clarity and carats.

4. A process for verifying, labeling and rating diamonds from mine to market, comprising:
a. gathering rough diamonds at a mine site under internal control supervision;
b. sorting said rough diamonds gathered at the mine under internal control to create batches of rough diamonds all gathered from the same source mine;
c. under internal control, offering for sale said batches of rough diamonds;
d. certifying the source of the rough diamonds to a purchaser;
e. said purchaser causes the purchased batch of diamonds to be cut and polished, where the polishing process is supervised to be sure the polished diamonds are same diamonds that were purchased;
f. under internal control, the purchaser sends said polished diamonds to a verification organization which either laser engraves the diamonds with a proprietary icon or utilizes non-invasive identification technology to certify a country of origin and compliance with applicable international standards for gathering diamonds, the verification organization also provides documents certifying the country of origin and compliance with the standards;
g. under internal control, said verification organization examines each polished diamond and assigns a quality rating for at least one of the following, cut, color, clarity and carets to each polished diamond;
h. under internal control, said verification organization applies non-invasive identification technology to each polished diamond for unique identification information and associates the information from the non-invasive identification technology in a database with an assigned information record setting forth the quality rating of the respective polished diamond; and
i. under internal control, the verification organization issues a quality report on each polished diamond showing on the report the country of origin and affirmative statements for compliance with the applicable legal standards along with at least one of the following, cut, color, clarity and carats.

5. A process for verifying, labeling and rating diamonds from mine to market, comprising:
a. supervising the gathering of rough diamonds at a mine and dividing the gathered rough diamonds into batches which are then offered for sale to a purchaser who receives a certification of the source of the diamonds purchased;
b. said purchaser causes the purchased batch of diamonds to be cut and polished, where the polishing process is supervised to be sure the polished diamonds are same diamonds that were purchased;
c. under internal control, the purchaser sends said polished diamonds to a verification organization which provides means to identify the diamonds to certify a country of origin, the verification organization providing documents certifying the country of origin;
d. under internal control, said verification organization examines each polished diamond and assigns a quality rating for at least one of cut, color, clarity and carets to each polished diamond;
e. under internal control, said verification organization obtains identification means of each polished diamond for unique identification information and associates the information in a database with an assigned information source setting forth the quality rating of the respective polished diamond; and
f. under internal control, the verification organization issues a quality report on each polished diamond showing on the report the country of origin along with at least one of the following, cut, color, clarity and carats.

6. The process in accordance with Claim 5 wherein step "f" further comprises the report containing affirmative statements for compliance with applicable legal standards for gathering the diamonds.

7. A process for verifying, labeling and rating gemstones from mine to market, comprising:
a. gathering rough gemstones at a mine site under internal control supervision;
b. sorting said rough gemstones gathered at the mine under internal control to create batches of rough gemstones all gathered from the same source mine;
c. under internal control, offering for sale at a site said batches of rough gemstones;
d. certifying the source of the rough gemstones and compliance with a Kimberley Process to a Sightholder;
e. said Sightholder purchases at least one batch of rough gemstones and prepares the purchased batch of gemstones for cutting and polishing under internal control processes of the Sightholder;
f. the Sightholder internal cutting and polishing process produces polished gemstones under internal control processes which can include providing non-invasive identification of the gemstones;
g. under internal control, the Sightholder sends said polished gemstones to a verification organization which either laser engraves the gemstones with a proprietary icon or utilizes non-invasive identification technology to certify a country of origin and compliance with the Kimberley Process, the verification organization also provides documents certifying the country of origin and compliance with the Kimberley Process;
h. under internal control, said verification organization examines each polished gemstone and assigns a quality rating for cut, color, clarity and carets to each polished gemstone;
i. under internal control, said verification organization applies non-invasive identification technology to each polished gemstone for unique identification information and associates the information from the non-invasive identification technology in a database with a certificate number and the quality rating of the respective polished gemstone; and
j. under internal control, the verification organization issues a quality report on each polished gemstone showing on the report the country of origin and affirmative statements for compliance with the Kimberley Process along with cut, color, clarity and carats.

8. A process for verifying, labeling and rating gemstones from mine to market, comprising:
a. gathering rough gemstones at a mine site under internal control supervision;
b. sorting said rough gemstones gathered at the mine under internal control to create batches of rough gemstones all gathered from the same source mine;
c. under internal control, offering for sale at a site said batches of rough gemstones;
d. certifying the source of the rough gemstones and compliance with a Kimberley Process to a Sightholder;
e. said Sightholder purchases at least one batch of rough gemstones and prepares the purchased batch of gemstones for cutting and polishing under internal control processes of the Sightholder;
f. the Sightholder sends said batch of gemstones to a third party who polishes the gemstones and returns the polished gemstones to the Sightholders, the process supervised under internal control which can include providing non-invasive identification of the gemstones;
g. under internal control, the Sightholder sends said polished gemstones to a verification organization which either laser engraves the gemstones with a proprietary icon or utilizes non-invasive identification technology to certify a country of origin and compliance with the Kimberley Process, the verification organization also provides documents certifying the country of origin and compliance with the Kimberley Process;
h. under internal control, said verification organization examines each polished gemstone and assigns a quality rating for cut, color, clarity and carets to each polished gemstone;
i. under internal control, said verification organization applies non-invasive identification technology to each polished gemstone for unique identification information and associates the information from the non-invasive identification technology in a database with a certificate number and the quality rating of the respective polished gemstone; and
j. under internal control, the verification organization issues a quality report on each polished diamond showing on the report the country of origin and affirmative statements for compliance with the Kimberley Process along with cut, color, clarity and carats.

9. A process for verifying, labeling and rating gemstones from mine to market, comprising:
a. gathering rough gemstones at a mine site under internal control supervision;
b. sorting said rough gemstones gathered at the mine under internal control to create batches of rough gemstones all gathered from the same source mine;
c. under internal control, offering for sale said batches of rough gemstones;
d. certifying the source of the rough gemstones to a purchaser;
e. said purchaser causes the purchased batch of gemstones to be cut and polished, where the polishing process is supervised to be sure the polished gemstones are the same gemstones that were purchased;
f. under internal control, the purchaser sends said polished diamonds to a verification organization which either laser engraves the gemstones with a proprietary icon or utilizes non-invasive identification technology to certify a country of origin and compliance with applicable international standards for gathering gemstones, the verification organization also provides documents certifying the country of origin and compliance with the standards;
g. under internal control, said verification organization examines each polished gemstone and assigns a quality rating for cut, color, clarity and carets to each polished gemstone;
h. under internal control, said verification organization applies non-invasive identification technology to each polished gemstone for unique identification information and associates the information from the non-invasive identification technology in a database with a certificate number and the quality rating of the respective polished gemstone; and
i. under internal control, the verification organization issues a quality report on each polished gemstone showing on the report the country of origin and affirmative statements for compliance with the applicable legal standards along with cut, color, clarity and carats.

10. A process for verifying, labeling and rating gemstones from mine to market, comprising:
a. gathering rough gemstones at a mine site under internal control supervision;
b. sorting said rough gemstones gathered at the mine under internal control to create batches of rough gemstones all gathered from the same source mine;
c. under internal control, offering for sale said batches of rough gemstones;
d. certifying the source of the rough gemstones to a purchaser;
e. said purchaser causes the purchased batch of gemstones to be cut and polished, where the polishing process is supervised to be sure the polished gemstones are same gemstones that were purchased;
f. under internal control, the purchaser sends said polished gemstones to a verification organization which either laser engraves the gemstones with a proprietary icon or utilizes non-invasive identification technology to certify a country of origin and compliance with applicable international standards for gathering gemstones, the verification organization also provides documents certifying the country of origin and compliance with the standards;
g. under internal control, said verification organization examines each polished gemstone and assigns a quality rating for at least one of the following, cut, color, clarity and carets to each polished gemstone;
h. under internal control, said verification organization applies non-invasive identification technology to each polished gemstone for unique identification information and associates the information from the non-invasive identification technology in a database with an assigned information record setting forth the quality rating of the respective polished gemstone; and
i. under internal control, the verification organization issues a quality report on each polished gemstone showing on the report the country of origin and affirmative statements for compliance with the applicable legal standards along with at least one of the following, cut, color, clarity and carats.

11. A process for verifying, labeling and rating gemstones from mine to market, comprising:
a. supervising the gathering of rough gemstones at a mine and dividing the gathered rough gemstones into batches which are then offered for sale to a purchaser who receives a certification of the source of the gemstones purchased;
b. said purchaser causes the purchased batch of gemstones to be cut and polished, where the polishing process is supervised to be sure the polished diamonds are same gemstones that were purchased;
c. under internal control, the purchaser sends said polished gemstones to a verification organization which provides means to identify the gemstones to certify a country of origin, the verification organization providing documents certifying the country of origin;
d. under internal control, said verification organization examines each polished gemstone and assigns a quality rating for at least one of cut, color, clarity and carets to each polished gemstone;
e. under internal control, said verification organization obtains identification means of each polished gemstone for unique identification information and associates the information in a database with an assigned information source setting forth the quality rating of the respective polished gemstone; and
f. under internal control, the verification organization issues a quality report on each polished gemstone showing on the report the country of origin along with at least one of the following, cut, color, clarity and carats.

12. The process in accordance with Claim 11 wherein step "f" further comprises the report containing affirmative statements for compliance with applicable legal standards for gathering the gemstones.
